# EUROPEAN PATENT SPECIFICATION

(11) **EP 1 284 901 B1**
(45) Date of publication and mention of the grant of the patent: **30.11.2005**
(21) Application number: 01934146.0
(22) Date of filing: 25.05.2001
(51) Int. Cl.: B62K 11/04, B62K 19/32

(54) **MOTORCYCLE**
MOTORRAD
MOTOCYCLE

(30) Priority: 26.05.2000 GB 0012948
(43) Date of publication of application: 26.02.2003
(73) Proprietor: LOTUS CARS LIMITED, Norwich, Norfolk NR14 8EZ (GB)
(72) Inventor: WILLIAMS, Peter, Attleborough, Norfolk NR17 2NW (GB); CALVERT, Ian, Attleborough, Norfolk NR17 2NY (GB); TURNER, James, William, Griffith, Wymondham, Norfolk NR18 0XS (GB)
(74) Representative: Pluckrose, Anthony William
(86) International application number: PCT/GB2001/002347
(87) International publication number: WO 2001/089916

(56) References cited:
- EP-A- 0 295 799
- FR-A- 632 166
- GB-A- 2 238 514
- US-A- 3 722 612
- US-A- 4 852 678
- US-A- 5 451 071

## Description

The present invention relates to a motorcycle.

Conventional motorcycle frames typically have a simple frame of tubular or box metal onto which are mounted a fuel tank, an engine and suspension assemblies for front and rear wheels. Conventional motorcycle frame designs are quite complex and laborious to assemble. Generally the different frame sections must be welded together. It is important that the frame is carefully aligned with the front and rear suspension assemblies for the front and rear wheels, so that there is no offset between wheels in the finished motorcycle.

In GB-A-2238514 a motorcycle frame is described which comprises a steering head, a central load bearing bracket to which are mountable a rear suspension assembly and an engine, a single blade strut extending in or parallel to a principal longitudinal plane of the frame to connect the central load bearing bracket to the steering head and a pair of box struts connecting the central load-bearing bracket to the steering head. The box struts are spaced apart, one on either side of the central blade strut. The blade strut predominantly provides the frame with rigidity in longitudinal and vertical directions and the box struts predominantly provide the frame with rigidity in lateral and torsional directions. The single blade strut can be replaced by a pair of longitudinally extending spaced-apart blade struts sandwiched between the box struts. In the described design each box strut is connected to the steering head at only one location.

EP-A-0295799 discloses a motorcycle having a monocoque, a steering head and a bracket. The monocoque has cross-section forming an inverted U-shape and does not have a load path extending completely around the total circumference of the structure, because the perimeter is not continuous. This impedes the monocoque's ability to resist torsional loading.

FR-A-632166 discloses a space frame for a motorcycle rather than a monocoque, although the frame is formed as one piece. The frame lacks a load path which extends completely around the circumference of the structure and is not formed from shell-like members bolted together.

US-3722612 discloses a motorcycyle frame with a means of mounting an engine onto a frame in order to reduce vibration from the engine. The frame structure is incidental to the invention described, the frame could be formed as a converted tubular frame or from metal pressings. In the latter case the pressings may form a petrol tank. There is no mention that the pressings are shell-like or that they can be fastened together by mechanical fasteners.

The present invention provides a motorcycle having a front wheel and a rear wheel which lie in a common principal plane of the motorcycle when the front wheel is in a centre position thereof, wherein the front and rear wheels are spaced apart longitudinally and are connected by a frame structure which comprises:-
a main load-bearing element in the form of a monocoque;
a steering head, mounted to the monocoque, to which is pivotally mounted a front wheel suspension assembly for the front wheel, the front wheel suspension assembly being mounted for rotation about a pivot axis passing through the steering head, the steering head lying in the principal plane of the motorcycle and the front wheel suspension assembly having handlebars which extend transversely of the principal plane;
and a bracket, mounted to the monocoque, which lies in the principal plane to which is mounted a rear wheel suspension assembly for the rear wheel;
wherein the monocoque is a hollow structure which has first and second opposed wall portions lying one either side of the principal plane and which has a load path which extends completely around a total circumference of the structure, when viewed in a vertical cross-section taken perpendicularly to the principal plane, and which has a transverse cross-section area of a magnitude sufficient to permit the hollow structure to provide the motorcycle with acceptable rigidity to torsional loading;
characterised in that the monocoque comprises a matched pair of shell-like members connected together by releasable mechanical fasteners.

Preferred embodiments of the present invention will now be described with reference to the accompanying drawings in which:-
Figure 1 is a schematic side elevation view of a first embodiment of motorcycle according to the present invention;
Figure 2 is a schematic plan view of the motorcycle of Figure 1;
Figure 3 is a schematic side elevation view of a second embodiment of motorcycle according to the invention;
Figure 4 is a schematic plan view of the motorcycle of Figure 3;
Figure 5 is a schematic plan view of a first variation on the design of the motorcycle of Figures 3 and 4;
Figure 6 is a schematic plan view of a second variation on the design of the motorcycle of Figures 3 and 4;
Figure 7 is a split view of a third variation in the design of motorcycle of Figures 3 and 4, showing two cross-sections;
Figure 8 is a split view of a fourth variation of the design of motorcycle of Figures 3 and 4, showing two cross-sections; and
Figure 9 is a transverse cross-section through the motorcycle frame of Figure 8.

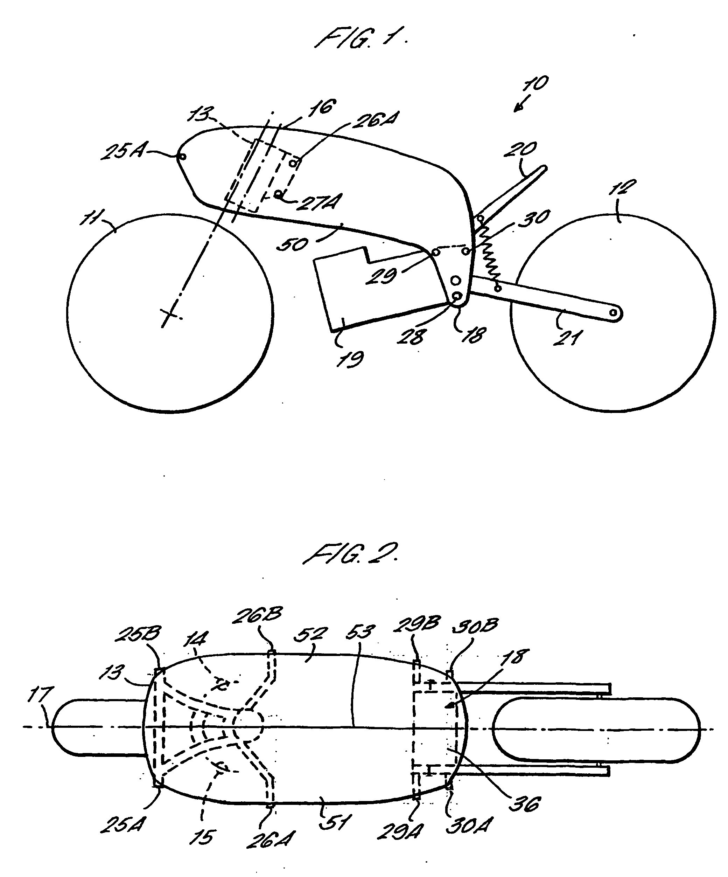

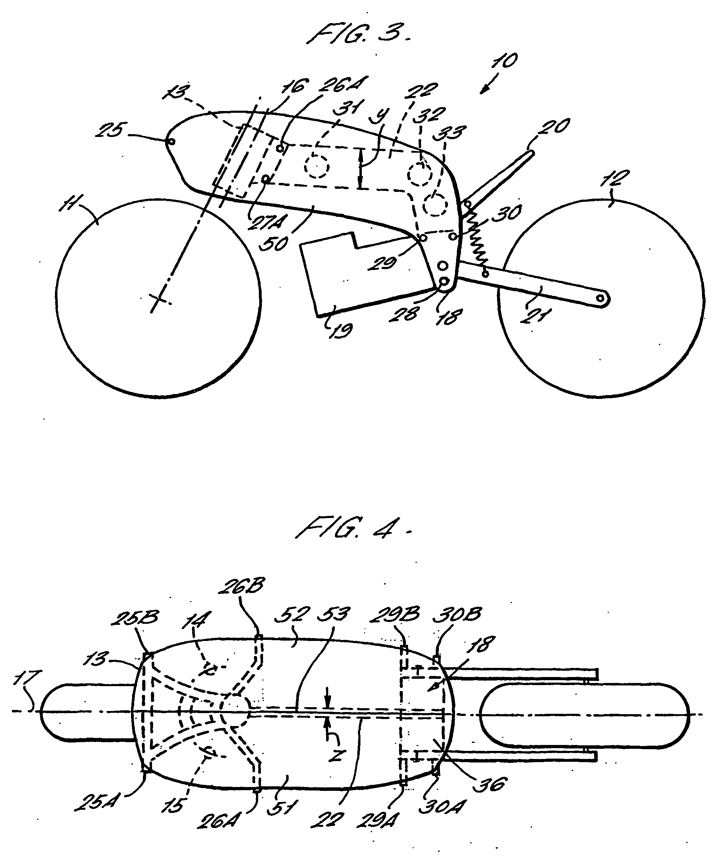

Turning now to Figure 1, a motorcycle 10 according to the present invention can be seen to comprise a front wheel 11 and a rear wheel 12. The front wheel 11 and the rear wheel 12 lie in a common principal plane 17 (see Figure 2) when the front wheel is in a centre position thereof. The front wheel 11 and the rear wheel 12 are spaced apart longitudinally and are connected by a frame structure. The frame structure comprises a monocoque 50 to which is mounted a steering head 13 and bracket 18.

It will be appreciated that as viewed in Figure 1, the principal plane of the motorcycle lies in the plane of the paper so that anything extending transversely of the principal plane will extend out of the plane of the paper or behind the plane of the paper. The principal plane is illustrated by dotted line 17 in Figure 2.

The monocoque 50 comprises two thin-walled shell structures 51 and 52 which are connected together by means of releasable mechanical fasteners such as bolts (not shown). In the embodiment shown in Figures 1 and 2 the two shell structures 51 and 52 are symmetric about the principal plane 17 and the joint line 53 when the two shell structures are connected lies in the principal plane 17.

The monocoque 50 is formed of a composite material, e.g. a composite material containing glass fibres or containing carbon fibres. Such composite materials give advantages of strength and rigidity for low weight. Preferably the monocoque 50 is formed as a moulding. An advantage of the present invention compared to prior motorcycles is that the use of a composite material monocoque greatly reduces the tooling and manufacturing costs of the motorcycle frame compared to traditional tubular frame structures and the like.

The monocoque has a load path which extends completely around a total circumference of the monocoque when viewed in a cross-section taken perpendicularly to the principal plane. The monocoque 50 has a transverse cross-sectional area sufficient to permit the hollow structure to provide the motorcycle with acceptable rigidity to torsional loading. The monocoque 50 additionally provides acceptable rigidity to bending moments acting to bend the monocoque 50 about an axis passing through the monocoque and lying perpendicular to the principal plane. Furthermore, the monocoque 50 provides acceptable rigidity to bending moments acting to bend the monocoque about an axis passing through the monocoque and lying in the principal plane.

A steering head 13 is mounted internally of the monocoque 50 by means of releasable mechanical fasteners such as bolts. Advantageously, it has been found by the applicant that the use of a monocoque structure in the frame structure allows for a simple mounting of the steering head at only one location to the monocoque on either side of the principal plane 17. Alternatively, the steering head 13 may be mounted at more than one location to the monocoque 50 on either side of the principal plane 17.

Where greater rigidity of the steering head to monocoque connection is required the steering head 13 may be connected to the shell structure 51 by three bolts 25A, 26A and 27A and to the shell structure 52 by three bolts 25B, 26B and 27B as shown in Figures 1 and 2. The bolts 26A, 26B and 27A, 27B connect the steering head 13 to the monocoque 50 at locations to the rear of the pivot axis 16. The bolts 25A and 25B connect the steering head 13 to the monocoque 50 at a location forward of the pivot axis 16.

The applicant has found that the connection of the steering head 13 to the monocoque 50 in front of the pivot axis 16 as well as rear of the pivot axis 16 improves the rigidity of the motorcycle frame structure and particularly the rigidity of the motorcycle frame structure in response to torsional loading. This effect is provided even whilst maintaining a simplicity of construction, namely the use of bolts as a means of connecting the steering head 13 to the remainder of the motorcycle, with the advantage that this renders the steering head 13 easily detachable.

A front wheel suspension assembly for the front wheel 11 is pivotally mounted to the steering head 13. The front wheel suspension assembly is not illustrated in Figure 1 for reasons of simplicity but in Figure 2 there can be seen two forks 14 and 15 of the front wheel suspension assembly. The forks 14 and 15 are parallel and spaced apart.

The steering head assembly (not shown in detail) for the front wheel 11 is pivotally mounted to the steering head 13, the front wheel assembly being mounted for rotation about a pivot axis 16 passing through the steering head 13. The steering head 13 lies in the principal plane of the motorcycle and is displaced vertically above the front wheel 11. The front wheel suspension assembly will have handlebars (not shown) which extend transversely of the principal plane of the motorcycle.

An aperture is provided in the monocoque 50 through which front forks 14 and 15 pass. The aperture must be of a shape and size sufficient to allow the front forks 14 and 15 to pivot about the pivot axis 16 to allow steering of the motorcycle.

An engine 19, a seat assembly 20 (with the seat omitted for simplicity) and a rear wheel suspension assembly 21 for the rear wheel 12 are mounted to the bracket 18. Optionally, the engine 19 may also be mounted to the steering head 13. Bracket 18 is mounted to the monocoque 50 by means of releasable mechanical fasteners such as bolts 28A, 28B, 29A, 29B, 30A, 30B.

In the first embodiment of the present invention shown in Figures 1 and 2 the steering head 13 and bracket 18 are connected only by the monocoque 50. All of the structural loads, including torsional loads, vertical loads, bending moments and lateral loads are born by the monocoque 50.

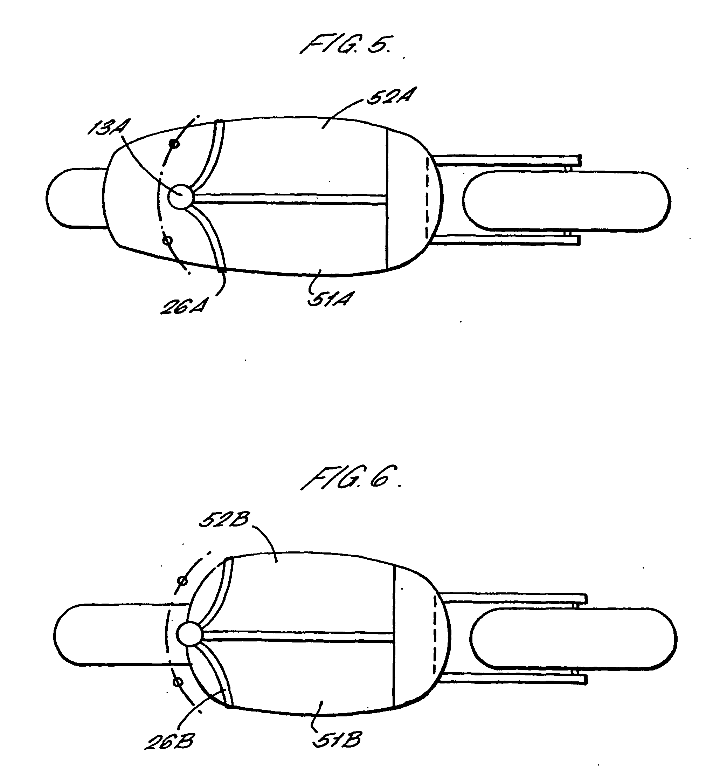

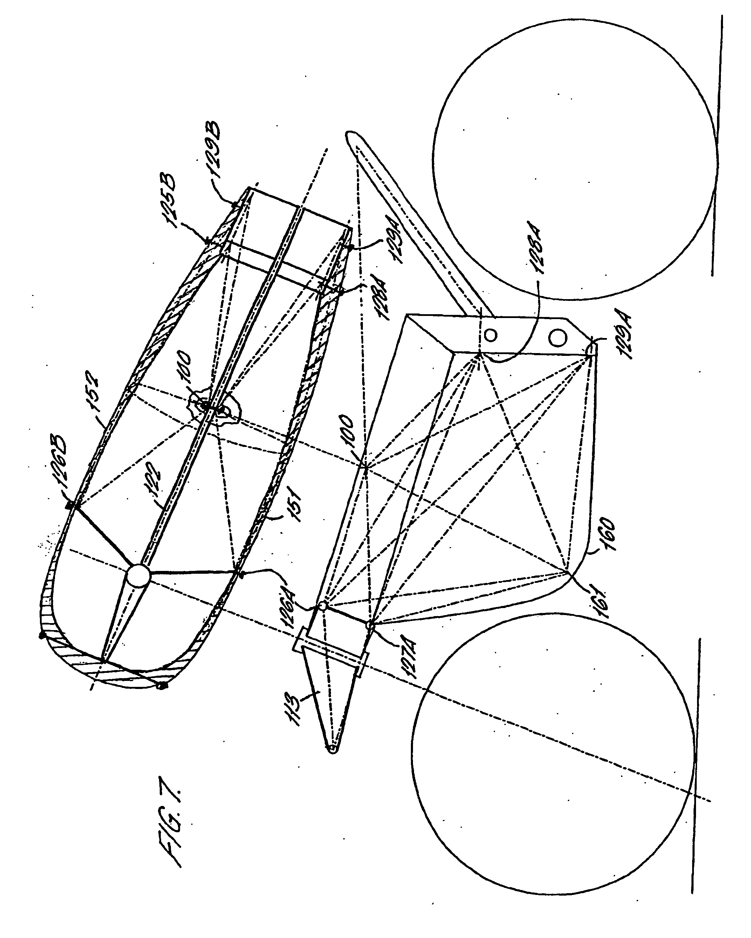

Figures 3 and 4 depict a second embodiment of the present invention wherein the frame structure comprises in addition to the monocoque 50, steering head 13 and bracket 18, a central strut 22 connecting the steering head 13 to the bracket 18. Optionally, the central strut 22 may be connected to the monocoque 50 by releasable mechanical fasteners such as bolts.

The central strut 22 provides strengthening of the frame structure to vertical loads and bending moments acting to bend the structure about an axis passing through the structure perpendicular to the principal plane. Also, the central strut 22 serves to facilitate assembly of the frame structure as explained below. The monocoque 50 still bears the majority of the structural loads applied to the motorcycle frame structure, especially torsional loads and bending moments acting to bend the structure about an axis passing through the structure and lying in the principal plane. This allows the cross-sectional area of the central strut 22 to be much reduced with consequential weight savings.

In the embodiment shown the central strut 22 is generally L-shaped when viewed in a side elevation. The central strut 22 is blade-like in configuration having a vertical dimension (Y in Figure 3) at least five times greater than its transverse dimension (Z in Figure 4).

Preferably the steering head 13 is formed as an extrusion, for instance of aluminium or of a plastic material. This is a very cost-efficient way of manufacturing the steering head 13. Indeed, an extrusion process can also be used to manufacture the bracket 18, which again can be manufactured either from aluminium or a plastic material in an extrusion process. Once again, extrusion will provide cost savings in the manufacture of the motorcycle as a whole.

It will be appreciated from Figure 3 that the central strut 22 of the second embodiment is mounted to an upwardly facing and transversely extending surface 36 (see Figure 4) of the bracket 18.

The extrusion of the bracket 18 will allow formation in the bracket 18 of a slot which can receive the central strut 22 and which can thereby allow easy attachment of the strut 22 to the bracket 18.

To maximise weight saving the central strut 22 can have apertures 31, 32, 33 extending therethrough.

In an alternative embodiment of a motorcycle (not shown in the drawings) the central strut 22 of the second embodiment of Figures 3 and 4 is replaced by a pair of central struts transversely spaced apart along the majority of their lengths, lying either side of the principal plane 17. This arrangement can be advantageous to allow a different packaging of components in the motorcycle has a whole.

All of the embodiments of motorcycle described above allow a simplified method of manufacture. It is envisaged that the monocoque 50 will be manufactured independently. It is envisaged that the steering head 13 will be manufactured independently. It is envisaged that the bracket 18 will be manufactured independently. It is envisaged that the engine 19 will be manufactured independently. It is also envisaged that the front wheel suspension assembly will be manufactured independently. It is envisaged that the rear wheel suspension assembly will be manufactured independently. It is further envisaged that each central strut 22 will be manufactured independently.

All of the independently manufactured subassemblies can be joined together in a simple production line to form the finished motorcycle.

The first embodiment of motorcycle frame structure is simply assembled by firstly joining the steering head 13 and bracket 18 to one of the shell structures 51 or 52 of the monocoque 50 by means of bolts and then joining the other of the two shell structures 51 or 52 to the first such shell structure, the steering head 13 and the bracket 18 by means of bolts.

In a preferred construction method of the second embodiment of motorcycle frame structure the steering head 13 and bracket 18 are first joined to the central strut or struts 22. This ensures that the steering head 13 and bracket 18 are correctly aligned and orientated with respect to each other and to bolt holes which have been pre-formed in the monocoque 50. After the steering head 13 and bracket 18 have been joined to the central strut or struts 22 one of the two shell structures 51 or 52 of the monocoque 50 is joined to the steering head 13 and bracket 18 by means of bolts. Finally, the other of the shell structures 51 or 52 is joined to the first of the two shell structures and the steering head 13 and bracket 18 by means of bolts. The use of bolts throughout the whole assembly process greatly speeds and simplifies construction. In addition the provision of the central strut or struts 22 in the second embodiment greatly eases inspection and maintenance of the finished motorcycle in that either of the two shell structures 51 or 52 of the monocoque 50 may be entirely removed from the motorcycle without disassembling either of the steering head 13 or bracket 18 from the other shell structure.

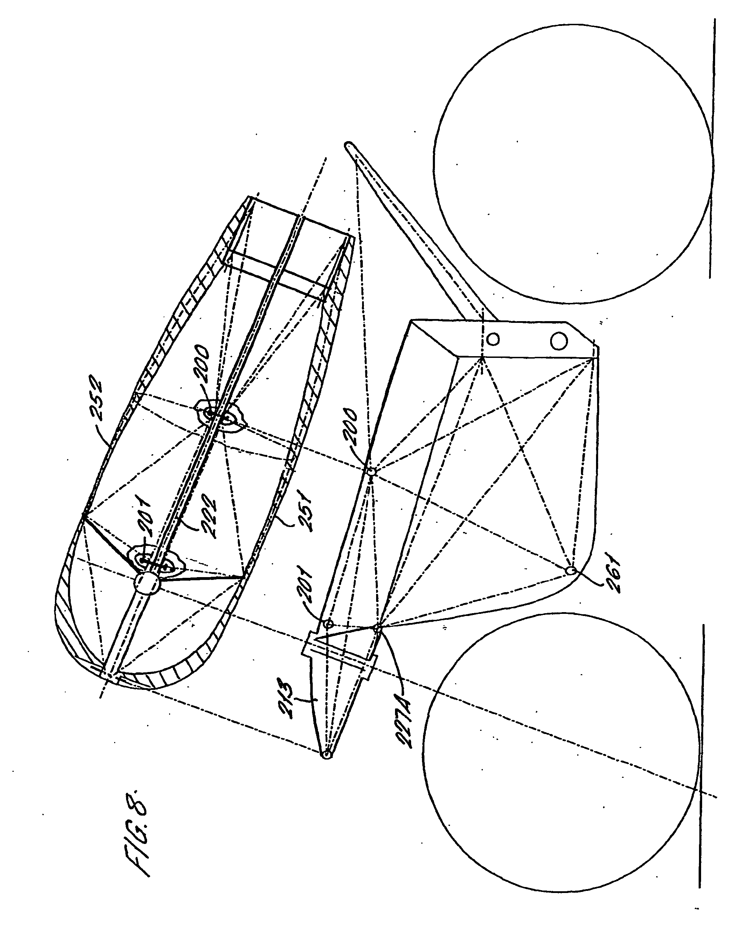

The design of the second embodiment of motorcycle frame can be varied as shown in Figure 5, by simplifying the connection of the two shell structures 51A and 51B to the steering head 13A. As illustrated in Figure 5 the shell structures 51A and 52A can be connected to the steering head 13A only at two points both lying aft of the axis of rotation of the front wheel. In other words, instead of having three points of attachment 25, 26, 27 as shown in Figure 3, the motorcycle of Figure 5 will have only two points of attachment at locations equivalent to 26, 27.

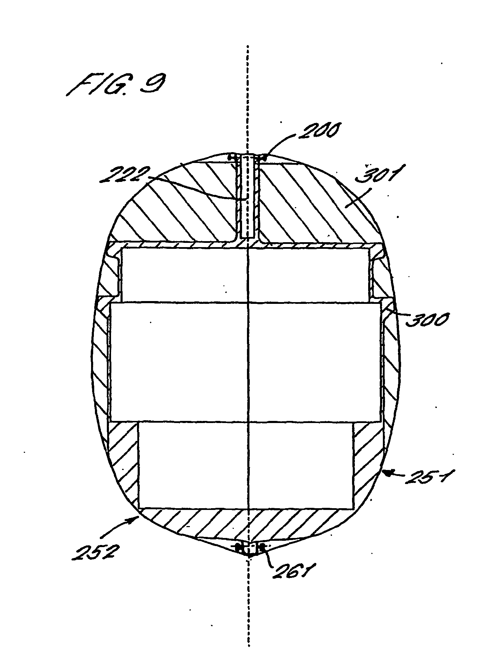

The design of the second embodiment of motorcycle can be varied as shown in Figure 6, by simplifying the connection of the two shell structures 51B and 52B to the steering head 13B and by shortening in length the shell structures 51B and 52B to stop aft of the steering head 13B, connection with the steering head 13B being achieved at only two points aft of the axis of rotation of the first wheel by point 26B. For instance the shell structure 51B will be connected at two points only to the steering head 13B, these two points corresponding to points 26 and 27 of Figure 3.

Figure 7 is a schematic view of a further variant of the second embodiment of motorcycle frame. This variant is very similar to the frame shown in Figures 3 and 4, but differs in that there is an additional point of attachment 100 of the two moulded parts 151 and 152 to the central strut 122. A bolt 100 will extend transversely through the motorcycle to join one moulded part 151 to the other 152 through the central strut 122. The two moulded parts 151 and 152 also extend lower than the previously described moulded parts 51 and 52 and in fact meet below the engine of the motorcycle (not shown) along a join 160. The lower edges of the two moulded parts 151 and 152 are bolted together at 161. The bolts at 100 and 161 remove the need for a pair of bolts equivalent to the bolts 29A,30A/29B,30B and instead only a pair of bolts e.g. 128A, 129A are used to connect each moulded part to the lower bracket part of a central strut 122. The dotted lines in the Figure 7 show lines along which forces will be transmitted through the shell formed of the parts 151 and 152 between the bolted connection points. The bolts all extend transversely to the principal plane of the motorcycle frame. The bolted connectors ensure that the loads carried by the shell formed by the two parts 151 and 152 are applied tangentially to the shell.

Figure 8 depicts a slight modification of the Figure 7 motorcycle frame. Whereas the Figure 7 frame shares with the Figures 3,4 frame a steering head attachment comprising for each moulded part a pair of bolts (26A, 27A in Figure 3; 126A,127A in Figure 7), connecting the moulded part to the steering head to the rear of the pivot axis of the front suspension; in the Figure 8 embodiment, each panel 252 is connected directly to the steering head 214 at only one point rear of the pivot axis of the front wheel suspension assembly and in Figure 8 a bolt 227A can be seen connecting the panel 251 to the steering head 213. Instead the two panels 251 and 252 are connected together and to the central strut 222 by a pair of transversely extending bolts 200 and 201 shown in Figure 8. The bolt 200 corresponds to the bolt 100 of Figure 7. The additional bolt 201 replaces the bolts 126A and 126B which are shown in Figure 7. Again the dotted lines depict the lines of transmission of force through the motorcycle structure.

Figure 9 is a cross-section taken transversely through the frame of Figure 8 showing how the moulded parts 251 and 252 could be made up of a combination of structural plastic parts. A large box section (large enough to contain e.g. an engine) is formed by moulding class B structural plastic to form a box structure 300. At the top the bolt 200 can be seen joining the two moulded parts 251 and 252 together transversely through the central strut 222. A class B structural plastic part 301 is then moulded around the inner part 300 and provides the majority of the outer surface of the finished product.

Whilst the second embodiment of motorcycle frame structure described and shown in the accompanying drawings in several variants comprises a central strut 22 of generally L-shaped construction, it will be appreciated that any shape of strut may be used. The shape of strut may, for example, be chosen to accommodate different sub-assembly designs. Alternatively, the shape of strut may be selected to facilitate ease of access to the engine and/or other components for maintenance or repair purposes. The shape of strut selected may even be a simple straight element.

It will be appreciated that whilst it is described above that component parts such as the steering head 13 and bracket 18 are preferably formed as an extrusion, any suitable alternative methods of manufacture, such as casting for example, may be employed.

It will be appreciated that whilst it is described above that the shell structures 51 and 52 are symmetric about the principal plane 17 and have a joint line 53 in the principal plane 17, the shell structures 51 and 52 may be non-symmetric and may have a joint line not in the principal plane 17.

A battery and/or electric components may be stored within the interior of the monocoque 50 of either embodiment.

The monocoque 50 of all embodiments of the present invention described above may take many shapes. In particular an upper surface of the monocoque may be shaped to conform to the central strut 22. The upper surface may be shaped to form a seating position for a rider of the motorcycle. The monocoque 50 in general may be shaped to form a cowling to increase the aerodynamic efficiency of the motorcycle and/or provide portions for protecting a rider of the motorcycle from the elements. The monocoque 50 may be provided with holes for styling purposes or to provide cooling inlets where the engine 19 is internally mounted.

The central strut 53 or central struts can be formed of extruded aluminium, aluminium alloy, magnesium or magnesium alloy. The steering head 13 and the bracket 18 can be bonded to the central strut 53 or struts. The engine 19 can be provided with an one or more brackets which are also bonded to the central strut or struts.

Whilst above the shell structures are moulded from composite materials, the shell structures could also be formed from a plastic material or from a metal material (e.g. aluminium, magnesium or alloys of either separately or both).

## Claims

1. A motorcycle having a front wheel (11) and a rear wheel (12) which lie in a common principal plane (17) of the motorcycle when the front wheel (11) is in a centre position thereof, wherein the front (11) and rear (12) wheels are spaced apart longitudinally and are connected by a frame structure which comprises:-
a main load-bearing element in the form of a monocoque (50);
a steering head (13, 113, 213) mounted to the monocoque (50), to which is pivotally mounted a front wheel suspension assembly for the front wheel, the front wheel suspension assembly being mounted for rotation about a pivot axis (16) passing through the steering head (13), the steering head lying in the principal plane (17) of the motorcycle and the front wheel suspension assembly having handlebars which extend transversely of the principal plane (17);
and a bracket (18), mounted to the monocoque (50), which lies in the principal plane (17) to which is mounted a rear wheel suspension assembly for the rear wheel (12);
wherein the monocoque (50) is a hollow structure which has first (51, 51A, 151, 251) and second (52, 52A, 152, 252) opposed wall portions lying one either side of the principal plane (17) and which has a load path which extends completely around a total circumference of the structure, when viewed in a vertical cross-section taken perpendicularly to the principal plane (17), and which has a transverse cross-section area of a magnitude sufficient to permit the hollow structure to provide the motorcycle with acceptable rigidity to torsional loading;
**characterised in that** the monocoque (50) comprises a matched pair of shell-like members (51, 51A, 151, 251; 52, 52A, 152, 252) connected together by releasable mechanical fasteners.

2. A motorcycle as claimed in claim 1, wherein the shell-like members (51, 51A, 151, 251; 52, 52A, 152, 252) extend forwardly of the steering head (13, 113, 213) and are fastened together at their leading edges at a point forward of the steering head (13, 113, 213).

3. A motorcycle as claimed in claim 1 or claim 2, wherein the shell-like members (51, 51A, 151, 251; 52, 52A, 152, 252) when joined together are symmetrical about the principal plane (17).

4. A motorcycle as claimed in claim 3, wherein the pair of shell-like members (51, 51A, 151, 251; 52, 52A, 152, 252) are joined in the principal plane (17) of the monocoque (50).

5. A motorcycle as claimed in claim 3, wherein the pair of shell-like members (51, 51A, 151, 251; 52, 52A, 152, 252) are joined at an angle to the principal plane (17).

6. A motorcycle as claimed in any one of claims 1 to 5, wherein one member (51, 51A, 151, 251; 52, 52A, 152, 252) of the matched pair of shell-like members (51, 51A, 151, 251; 52, 52A, 152, 252) may be detached from the motorcycle to allow access to the interior of the monocoque (50).

7. A motorcycle as claimed in claim 6, wherein the matched pair of shell-like members (51, 51A, 151, 251; 52, 52A, 152, 252) when joined together to form the monocoque (50) jointly enclose an engine.

8. A motorcycle as claimed in any one of claims 1 to 7, wherein each of the matched pair of shell-like members (51, 51A, 151, 251; 52, 52A, 152, 252) is a moulding formed from a composite material.

9. A motorcycle as claimed in claim 8, wherein the composite material contains carbon fibres.

10. A motorcycle as claimed in claim 8, wherein the composite material contains glass fibres.

11. A motorcycle as claimed in any one of claims 1 to 7, wherein each of the matched pair of shell-like members (51, 52) is composed of a metal.

12. A motorcycle as claimed in claim 11, wherein the metal of the shell-like members (51, 52) is aluminium.

13. A motorcycle as claimed in any one of claims 1 to 7, wherein each of the matched pair of shell-like members (251, 252) is formed of an outer part (301) of a first structural plastic material encasing an inner part (300) of a second structural plastic material.

14. A motorcycle as claimed in any one of the preceding claims, wherein the monocoque (50) comprises a plurality of air holes.

15. A motorcycle as claimed in any one of the preceding claims, wherein the steering head (13, 113, 213) is connected to the monocoque (50) at one or more locations.

16. A motorcycle as claimed in claim 15, wherein the steering head (13, 113, 213) is connected to the monocoque (50) by releasable mechanical fasteners (25A, 26A, 27A, 25B, 26B, 27B 126A, 126B, 127A, 201, 227A).

17. A motorcycle as claimed in any one of the preceding claims wherein the steering head (13; 113; 213) is formed from an extrusion.

18. A motorcycle as claimed in claim 17 wherein the steering head (13; 113; 213) is formed from an extrusion of aluminium or an alloy thereof.

19. A motorcycle as claimed in claim 17 wherein the steering head (13; 113; 213) is formed from an extrusion of a plastic material.

20. A motorcycle as claimed in claim 17 wherein the steering head (13; 113; 213) is formed from an extrusion of magnesium or an alloy thereof.

21. A motorcycle as claimed in any one of the preceding claims wherein the bracket (18) is connected to the monocoque by releasable mechanical fasteners (28A, 28B, 29A, 29B).

22. A motorcycle as claimed in any one of the preceding claims wherein the bracket (18) is formed from an extrusion.

23. A motorcycle as claimed in claim 21 wherein the bracket (18) is formed from an extrusion of aluminium or an alloy thereof.

24. A motorcycle as claimed in claim 21 wherein the bracket (18) is formed from an extrusion of a plastic material.

25. A motorcycle as claimed in any one of the preceding claims further comprising one or more additional load-bearing elements in the form of one or more central struts (22; 122; 222) extending longitudinally between and connecting the steering head (13; 113; 213) and the bracket (18) and extending within the hollow structure of the monocoque (50).

26. A motorcycle as claimed in claim 25 provided with only a single central strut (22; 122; 222) which lies in the principal plane.

27. A motorcycle as claimed in claim 26 wherein the monocoque (50) comprises a pair of shell-like members (151, 152, 251, 252) connected together by releasable mechanical fasteners (100; 201, 227A) at least one of which (100; 200) extends transversely of the principal plane (17) to connect upper edges of the shell-like members (151, 152; 251, 252) to the central strut (122; 222).

28. A motorcycle as claimed in claim 27 wherein a pair of mechanical fasteners (200, 201) each extend transversely of the principal plane (17) to connect the upper edges of the shell-like members (251,252) to the central strut (222) at a pair of different locations.

29. A motorcycle as claimed in claim 25 provided with a pair of central struts transversely spaced apart along a majority of their lengths lying one on either side of the principal plane (17) and both extending within the hollow structure of the monocoque (50).

30. A motorcycle as claimed in any of claims 25 to 29 wherein each central strut (22; 122; 222) is generally L-shaped when viewed in a side elevation.

31. A motorcycle as claimed in any of claims 25 to 30 wherein the one or more central struts (22; 122; 222) are formed from a composite material.

32. A motorcycle as claimed in any one of claims 25 to 31 wherein the one or more central struts (22; 122; 222) are formed from aluminium or an alloy thereof.

33. A motorcycle as claimed in claim 31 wherein the one or more central struts (22; 122;222) are formed by an extrusion process.

34. A motorcycle as claimed in any one of claims 25 to 30 wherein the one or more central struts (22; 122; 222) are formed from magnesium or an alloy thereof.

35. A motorcycle as claimed in claim 34 wherein the one or more central struts (22; 122; 222) are formed by an extrusion process.

36. A motorcycle as claimed in any of claims 25 to 35 wherein the one or more central struts (22; 122; 222) have a plurality of apertures extending transversely therethrough.

37. A motorcycle as claimed in any of claims 25 to 36 wherein the one or more central struts (22; 122; 222) are each blade like in configuration having a maximum vertical dimension at least five times greater than a maximum transverse dimension thereof.

38. A motorcycle as claimed in any one of claims 25 to 37 wherein an upper surface of the monocoque (50) is conformal with an upper surface of the one or more central struts (22; 122;222).

39. A motorcycle as claimed in any one of the preceding claims wherein the front wheel suspension assembly comprises a pair of spaced apart parallel forks and the steering head (13; 113; 213) and monocoque (50) define therebetween one or more apertures through which the forks extend and wherein the one or more defined apertures are of a size and configuration sufficient to allow for a range of pivotal motion of the forks about the pivot axis (16) of the front wheel suspension assembly.

40. A motorcycle as claimed in any one of the preceding claims wherein an engine (19) is mounted to the bracket (18).

41. A motorcycle as claimed in any one of the preceding claims wherein a seat assembly (20) is mounted to the bracket (18).

42. A method of manufacture of a motorcycle as claimed in any one of the preceding claims in which the monocoque (50), the steering head (13; 113; 213), the bracket (18) the engine (19) and the suspension assemblies are each separately fabricated as independent integers and then the completed integers are joined together.

43. A method of manufacture of the motorcycle claimed in any one of claims 25 to 37 in which the steering head (13; 113 ; 213), the bracket (18) and the engine (19) are first joined to the one or more central struts (22; 122; 222); the one or more central struts (22; 122; 222) assisting in the correct location and orientation of the steering head (13; 113; 213)bracket (18) and engine (19), and then the monocoque (50) is connected to at least the steering head (13; 113; 213) and the bracket.

44. A method of manufacture of the motorcycle claimed in any one of claims 25 to 37 in which the steering head (13; 113; 213) and the bracket (18) are bonded to the one or more central struts (22; 122; 222).

45. A method as claimed in claim 44 wherein one or more brackets (18) are connected to the engine (19) of the motorcycle and the one or more brackets (18) are bonded to the one or more central struts (22; 122; 222).

## Patentansprüche

1. Motorrad mit einem Vorderrad (11) und einem Hinterrad (12), welche in einer gemeinsamen Hauptebene (17) des Motorrads liegen, wenn das Vorderrad (11) sich in seiner mittigen Position befindet, wobei das Vorderrad (11) und das Hinterrad (12) in Längsrichtung beabstandet und durch eine Rahmenstruktur verbunden sind, welche umfasst:-
ein die Hauptlast tragendes Element in der Form eines Monocoques (50);
einen Lenkkopf (13, 113, 213), welcher am Monocoque (50) angebracht ist, an welchem ein Vorderradaufhängungsaufbau für das Vorderrad drehbar angebracht ist, wobei der Vorderradaufhängungsaufbau zur Drehung um eine Schwenkachse (16) angebracht ist, die durch den Lenkkopf (13) hindurchgeht, wobei der Lenkkopf in der Hauptebene (17) des Motorrads liegt und wobei der Vorderradaufhängungsaufbau Lenkstangen aufweist, welche sich quer zur Hauptebene (17) erstrecken;
und einen Träger (18), welcher am Monocoque (50) angebracht ist, welcher in der Hauptebene (17) liegt, an welchem ein Hinterradaufhängungsaufbau für das Hinterrad (12) angebracht ist;
wobei das Monocoque (50) eine hohle Struktur ist, welches erste (51, 51A, 151, 251) und zweite (52, 52A, 152, 252), einander gegenüberliegende Wandabschnitte aufweist, die auf beiden Seiten der Hauptebene (17) liegen, und welches einen Lastpfad aufweist, welcher sich völlig um einen Gesamtumfang der Struktur erstreckt, wenn in einem vertikalen Querschnitt betrachtet, der senkrecht zur Hauptebene (17) aufgenommen ist, und welcher eine querliegende Querschnittsfläche von einer Größenordnung aufweist, die ausreicht, um es der hohlen Struktur zu ermöglichen, dem Motorrad eine annehmbare Steifigkeit für torsionale Belastung bereitzustellen;
**dadurch gekennzeichnet, dass** das Monocoque (50) ein zueinander passendes Paar von schalenförmigen Elementen (51, 51A, 151, 251; 52, 52A, 152, 252) umfasst, welche miteinander durch lösbare mechanische Befestigungselemente verbunden sind.

2. Motorrad gemäß Anspruch 1, wobei die schalenförmigen Elemente (51, 51A, 151, 251; 52, 52A, 152, 252) sich nach vorne vor den Lenkkopf (13, 113, 213) erstrecken und miteinander an ihren führenden Kanten an einem Punkt vor dem Lenkkopf (13, 113, 213) befestigt sind.

3. Motorrad gemäß Anspruch 1 oder Anspruch 2, wobei die schalenförmigen Elemente (51, 51A, 151, 251; 52, 52A, 152, 252), wenn sie zusammengefügt sind, symmetrisch um die Hauptebene (17) angeordnet sind.

4. Motorrad gemäß Anspruch 3, wobei das Paar schalenförmiger Elemente (51, 51A, 151, 251; 52, 52A, 152, 252) in der Hauptebene (17) des Monocoques (50) zusammengefügt ist.

5. Motorrad gemäß Anspruch 3, wobei das Paar schalenförmiger Elemente (51, 51A, 151, 251; 52, 52A, 152, 252) in einem Winkel zur Hauptebene (17) zusammengefügt ist.

6. Motorrad gemäß jedem der Ansprüche 1 bis 5, wobei ein Element (51, 51A, 151, 251; 52, 52A, 152, 252) des zueinander passenden Paares schalenförmiger Elemente (51, 51A, 151, 251; 52, 52A, 152, 252) vom Motorrad abgenommen werden kann, um den Zugang zum Inneren des Monocoques (50) zu gestatten.

7. Motorrad gemäß Anspruch 6, wobei das Paar schalenförmiger Elemente (51, 51A, 151, 251; 52, 52A, 152, 252), wenn sie zusammengefügt sind, um das Monocoque (50) auszubilden, gemeinsam einen Motor einschließt.

8. Motorrad gemäß jedem der Ansprüche 1 bis 7, wobei jedes Element des zueinander passenden Paares schalenförmiger Elemente (51, 51A, 151, 251; 52, 52A, 152, 252) ein Formpressteil ist, welcher aus einem Verbundmaterial hergestellt ist.

9. Motorrad gemäß Anspruch 8, wobei das Verbundmaterial Karbonfasern enthält.

10. Motorrad gemäß Anspruch 8, wobei das Verbundmaterial Glasfasern enthält.

11. Motorrad gemäß jedem der Ansprüche 1 bis 7, wobei jedes Element des zueinander passenden Paares schalenförmiger Elemente (51, 52) aus einem Metall aufgebaut ist.

12. Motorrad gemäß Anspruch 11, wobei das Metall der schalenförmigen Elemente (51, 52) Aluminium ist.

13. Motorrad gemäß jedem der Ansprüche 1 bis 7, wobei jedes Element des zueinander passenden Paares schalenförmiger Elemente (251, 252) aus einem äußeren Teil (301) eines ersten Strukturkunststoffmaterials hergestellt ist, welches einen inneren Teil (300) eines zweiten Strukturkunststoffmaterials einschließt.

14. Motorrad gemäß jedem der vorangehenden Ansprüche, wobei das Monocoque (50) eine Mehrzahl von Luftlöchern umfasst.

15. Motorrad gemäß jedem der vorangehenden Ansprüche, wobei der Lenkkopf (13, 113, 213) mit dem Monocoque (50) an einer oder mehreren Stellen verbunden ist.

16. Motorrad gemäß Anspruch 15, wobei der Lenkkopf (13, 113, 213) mit dem Monocoque (50) durch lösbare mechanische Befestigungselemente (25A, 26A, 27A, 25B, 26B, 27B, 126A, 126B, 127A, 201, 227A) verbunden ist.

17. Motorrad gemäß jedem der vorangehenden Ansprüche, wobei der Lenkkopf (13; 113; 213) aus einem Strangpressteil ausgebildet ist.

18. Motorrad gemäß Anspruch 17, wobei der Lenkkopf (13; 113; 213) aus einem Strangpressteil aus Aluminium oder einer seiner Legierungen ausgebildet ist.

19. Motorrad gemäß Anspruch 17, wobei der Lenkkopf (13; 113; 213) aus einem Strangpressteil aus einem Kunststoffmaterial ausgebildet ist.

20. Motorrad gemäß Anspruch 17, wobei der Lenkkopf (13; 113; 213) aus einem Strangpressteil aus Magnesium oder einer seiner Legierungen ausgebildet ist.

21. Motorrad gemäß jedem der vorangehenden Ansprüche, wobei der Träger (18) mit dem Monocoque durch lösbare mechanische Befestigungselemente (28A, 28B, 29A, 29B) verbunden ist.

22. Motorrad gemäß jedem der vorangehenden Ansprüche, wobei der Träger (18) aus einem Strangpressteil ausgebildet ist.

23. Motorrad gemäß Anspruch 21, wobei der Träger (18) aus einem Strangpressteil aus Aluminium oder einer seiner Legierungen ausgebildet ist.

24. Motorrad gemäß Anspruch 21, wobei der Träger (18) aus einem Strangpressteil aus einem Kunststoffmaterial ausgebildet ist.

25. Motorrad gemäß jedem der vorangehenden Ansprüche, des Weiteren umfassend eines oder mehrere zusätzliche lasttragende Elemente in der Form einer oder mehrerer Zentralstreben (22; 122; 222), welche sich in Längsrichtung zwischen dem Lenkkopf (13; 113; 213)und dem Träger (18) erstreckt(en) und diese verbindet(en) und sich innerhalb der hohlen Struktur des Monocoque (50) erstreckt (en) .

26. Motorrad gemäß Anspruch 25, ausgestattet mit nur einer einzelnen Strebe (22; 122; 222), welche in der Hauptebene liegt.

27. Motorrad gemäß Anspruch 26, wobei das Monocoque (50) ein Paar schalenförmiger Elemente (151, 152, 251, 252) umfasst, welche miteinander durch lösbare mechanische Befestigungselemente (100; 201, 227A) verbunden sind, von denen sich mindestens eines (100; 200) quer zur Hauptebene (17) erstreckt, um die oberen Kanten der schalenförmigen Elemente (151, 152; 251, 252) mit der Zentralstrebe (122; 222) zu verbinden.

28. Motorrad gemäß Anspruch 27, wobei ein Paar schalenförmiger Elemente (200, 201) sich jeweils quer zur Hauptebene (17) erstreckt, um die oberen Kanten der schalenförmigen Elemente (251, 252) mit der Zentralstrebe (222) zu verbinden.

29. Motorrad gemäß Anspruch 25, ausgestattet mit einem Paar von Zentralstreben, welche quer zueinander entlang eines Großteils ihrer Längen beabstandet sind, wobei sie an jeder Seite der Hauptebene (17)liegen und sich beide in der hohlen Struktur des monocoque (50) erstrecken.

30. Motorrad gemäß jedem der Ansprüche 25 bis 29, wobei jede Zentralstrebe (22; 122; 222) allgemein L-förmig ist, wenn sie in einem Seitenaufriss betrachtet wird.

31. Motorrad gemäß jedem der Ansprüche 25 bis 30, wobei die eine oder die mehreren Zentralstrebe(n) (22; 122; 222) aus einem Verbundmaterial ausgebildet ist(sind).

32. Motorrad gemäß jedem der Ansprüche 25 bis 31, wobei die eine oder die mehreren Zentralstrebe (n) (22; 122; 222) aus Aluminium oder einem seiner Legierungen ausgebildet ist(sind).

33. Motorrad gemäß Anspruch 31, wobei die eine oder die mehreren Zentralstrebe(n) (22; 122; 222) durch einen Strangpressvorgang ausgebildet ist(sind).

34. Motorrad gemäß jedem der Ansprüche 25 bis 30, wobei die eine oder die mehreren Zentralstrebe(n) (22; 122; 222) aus Magnesium oder einem seiner Legierungen ausgebildet ist(sind).

35. Motorrad gemäß Anspruch 34, wobei die eine oder die mehreren Zentralstrebe(n) (22; 122; 222) durch einen Strangpressvorgang ausgebildet ist(sind).

36. Motorrad gemäß jedem der Ansprüche 25 bis 35, wobei die eine oder die mehreren Zentralstrebe(n) (22; 122; 222) eine Mehrzahl von Öffnungen aufweist(en), welche sich in der Querrichtung hindurch erstrecken.

37. Motorrad gemäß jedem der Ansprüche 25 bis 36, wobei die eine oder die mehreren Zentralstrebe(n) (22; 122; 222) eine klingenartige Konfiguration aufweist (en), welche eine maximale vertikale Abmessung aufweist (en), die wenigstens fünfmal größer ist als eine maximale Abmessung in ihrer(n) Querrichtung(en).

38. Motorrad gemäß jedem der Ansprüche 25 bis 37, wobei eine obere Oberfläche des Monocoques (50) mit einer oberen Oberfläche der einen oder mehreren Zentralstrebe(n) (22; 122; 222) übereinstimmt.

39. Motorrad gemäß jedem der vorangehenden Ansprüche, wobei der Vorderradaufhängungsaufbau ein Paar von beabstandeten parallelen Gabeln umfasst und der Lenkkopf (13; 113; 213) und das Monocoque (50) miteinander eine oder mehrere Öffnungen definieren, durch welche sich die Gabeln erstrecken und wobei die eine oder die mehreren definierten Öffnungen eine Größe und Konfiguration aufweisen, die ausreicht, um einen Bereich drehender Bewegung der Gabeln um die Schwenkachse (16) des Vorderradaufhängungsaufbaus zu gestatten.

40. Motorrad gemäß jedem der vorangehenden Ansprüche, wobei ein Motor (19) am Träger (18) angebracht ist.

41. Motorrad gemäß jedem der vorangehenden Ansprüche, wobei ein Sitzaufbau (20) am Träger (18) angebracht ist.

42. Verfahren zur Herstellung eines Motorradsgemäß jedem der vorangehenden Ansprüche, in welchem das Monocoque (50), der Lenkkopf (13; 113; 213), der Träger (18), der Motor (19) und die Aufhängungsaufbauten jeweils getrennt als unabhängige Einzelteile hergestellt werden und dann die fertigen Einzelteile zusammengefügt werden.

43. Verfahren zur Herstellung eines Motorrads gemäß jedem der Ansprüche 25 bis 37, in welchem der Lenkkopf (13; 113; 213), der Träger (18) und der Motor (19) zuerst mit der einen oder den mehreren Zentralstrebe(n) (22; 122; 222) zusammengefügt werden; wobei die eine oder die mehreren Zentralstrebe(n) (22; 122; 222) bei der richtigen Anordnung und Ausrichtung des Lenkkopfs (13; 113; 213), des Trägers (18) und des Motors (19) helfen, und in welchem dann das Monocoque (50) mit mindestens dem Lenkkopf (13; 113; 213) und dem Träger verbunden wird.

44. Verfahren zur Herstellung eines Motorrads gemäß jedem der Ansprüche 25 bis 37, in welchem der Lenkkopf (13; 113; 213) und der Träger (18) mit der einen oder den mehreren Zentralstrebe(n) (22; 122; 222) verklebt sind.

45. Verfahren gemäß Anspruch 44, wobei der eine oder die mehreren Träger (18) mit dem Motor (19) des Motorrads verbunden ist(sind) und der eine oder die mehreren Träger (18) mit der einen oder den mehreren Zentralstrebe(n) (22; 122; 222) verklebt ist(sind).

## Revendications

1. Motocycle comportant une roue avant (11) et une roue arrière (12) qui se trouvent dans un plan principal commun (17) du motocycle lorsque la roue avant (11) est dans sa position centrée, dans lequel les roues avant (11) et arrière (12) sont espacées longitudinalement et sont reliées par une structure de cadre qui comprend :
un élément principal de support de charge sous forme de structure monocoque (50) ;
une tête de direction (13, 113, 213) montée sur la structure monocoque (50), sur laquelle est monté pivotant un ensemble avant de suspension de roue destiné à la roue avant, l'ensemble avant de suspension de roue étant monté pour rotation autour d'un axe (16) de pivot passant par la tête de direction (13), la tête de direction se trouvant dans le plan principal (17) du motocycle et l'ensemble avant de suspension de roue comportant des poignées à tige qui s'étendent transversalement au plan principal (17) ;
et une potence (18), montée sur la structure monocoque (50), qui se trouve dans le plan principal (17), sur laquelle est monté un ensemble arrière de suspension arrière destiné à la roue arrière (12) ;
dans lequel la structure monocoque (50) est une structure creuse qui comporte des premières (51, 51A, 151, 251) et secondes (52, 52A, 152, 252) parties de parois opposées se trouvant de chaque côté du plan principal (17) et qui comporte un trajet de charge qui s'étend complètement sur toute la circonférence de la structure lorsque l'on regarde suivant une coupe verticale prise perpendiculairement au plan principal (17), et qui comporte une zone de section transversale d'importance suffisante pour permettre à la structure creuse de donner au motocycle une rigidité acceptable à une charge de torsion ;
**caractérisé en ce que** la structure monocoque (50) comprend une paire appariée d'éléments (51, 51A, 151, 251 ; 52, 52A, 152, 252) de type coque reliés les uns aux autres par des dispositifs de fixation mécaniques libérables.

2. Motocycle selon la revendication 1, dans lequel les éléments (51, 51A, 151, 251 ; 52, 52A, 152, 252) de type coque s'étendent vers l'avant de la tête de direction (13, 113, 213) et sont fixés les uns aux autres au niveau de leurs bords de tête à un point qui se trouve vers l'avant de la tête de direction (13, 113, 213).

3. Motocycle selon la revendication 1 ou la revendication 2, dans lequel les éléments (51, 51A, 151, 251 ; 52, 52A, 152, 252) de type coque sont, lorsqu'ils sont reliés les uns aux autres, symétriques autour du plan principal (17).

4. Motocycle selon la revendication 3, dans lequel la paire d'éléments (51, 51A, 151, 251 ; 52, 52A, 152, 252) de type coque sont reliés dans le plan principal (17) de la structure monocoque (50).

5. Motocycle selon la revendication 3, dans lequel la paire d'éléments (51, 51A, 151, 251 ; 52, 52A, 152, 252) de type coque sont reliés à un certain angle par rapport au plan principal (17).

6. Motocycle selon l'une quelconque des revendications 1 à 5, dans lequel un élément (51, 51A, 151, 251 ; 52, 52A, 152, 252) de la paire appariée d'éléments (51, 51A, 151, 251 ; 52, 52A, 152, 252) de type coque peut être démonté du motocycle pour permettre l'accès à l'intérieur de la structure monocoque (50).

7. Motocycle selon la revendication 6, dans lequel la paire appariée d'éléments (51, 51A, 151, 251 ; 52, 52A, 152, 252) de type coque confinent, par liaison, un moteur lorsqu'ils sont reliés l'un à l'autre pour former ensemble la structure monocoque (50).

8. Motocycle selon l'une quelconque des revendications 1 à 7, dans lequel chacun de la paire appariée d'éléments (51, 51A, 151, 251 ; 52, 52A, 152, 252) de type coque est un moulage formé d'un matériau composite.

9. Motocycle selon la revendication 8, dans lequel le matériau composite contient des fibres de carbone.

10. Motocycle selon la revendication 8, dans lequel le matériau composite contient des fibres de verre.

11. Motocycle selon l'une quelconque des revendications 1 à 7, dans lequel chacun de la paire appariée d'éléments (51, 52) de type coque est composé de métal.

12. Motocycle selon la revendication 11, dans lequel le métal des éléments (51, 52) de type coque est l'aluminium.

13. Motocycle selon l'une quelconque des revendications 1 à 7, dans lequel chacun de la paire appariée d'éléments (251, 252) de type coque est formé d'une partie extérieure (301) en une première matière plastique structurelle confinant une partie intérieure (300) en une seconde matière plastique structurelle.

14. Motocycle selon l'une quelconque des revendications précédentes, dans lequel la structure monocoque (50) comprend une pluralité de trous d'aération.

15. Motocycle selon l'une quelconque des revendications précédentes, dans lequel la tête de direction (13, 113, 213) est liée à la structure monocoque (50) en un ou plusieurs emplacements.

16. Motocycle selon la revendication 15, dans lequel la tête de direction (13, 113, 213) est liée à la structure monocoque (50) par des dispositifs de fixation mécaniques libérables (25A, 26A, 27A, 25B, 26B, 27B, 126A, 126B, 127A, 201, 227A).

17. Motocycle selon l'une quelconque des revendications précédentes, dans lequel la tête de direction (13 ; 113 ; 213) est formée à partir d'une extrusion.

18. Motocycle selon la revendication 17, dans lequel la tête de direction (13 ; 113 ; 213) est formée à partir d'une extrusion d'aluminium ou d'un alliage de celui-ci.

19. Motocycle selon la revendication 17, dans lequel la tête de direction (13 ; 113 ; 213) est formée à partir d'une extrusion de matière plastique.

20. Motocycle selon la revendication 17, dans lequel la tête de direction (13 ; 113 ; 213) est formée à partir d'une extrusion de magnésium ou d'un alliage de celui-ci.

21. Motocycle selon l'une quelconque des revendications précédentes, dans lequel la potence (18) est liée à la structure monocoque par des dispositifs de fixation mécaniques libérables (28A, 28B, 29A, 29B).

22. Motocycle selon l'une quelconque des revendications précédentes, dans lequel la potence (18) est formée à partir d'une extrusion.

23. Motocycle selon la revendication 21, dans lequel la potence (18) est formée à partir d'une extrusion d'aluminium ou d'un alliage de celui-ci.

24. Motocycle selon la revendication 21, dans lequel la potence (18) est formée à partir d'une extrusion de matière plastique.

25. Motocycle selon l'une quelconque des revendications précédentes, comprenant en outre un ou plusieurs éléments supplémentaires de support de charge sous la forme d'une ou de plusieurs entretoises centrales (22 ; 122 ; 222) s'étendant longitudinalement entre la tête de direction (13 ; 113 ; 213) et la potence (18), et établissant une liaison entre elles, et s'étendant à l'intérieur de la structure creuse de la structure monocoque (50).

26. Motocycle selon la revendication 25 pourvu d'une seule entretoise centrale (22 ; 122 ; 222) qui se trouve dans le plan principal.

27. Motocycle selon la revendication 26, dans lequel la structure monocoque (50) comprend une paire d'éléments (151, 152, 251, 252) de type coque reliés l'un à l'autre par des dispositifs de fixation mécaniques libérables (100 ; 201, 227A) dont au moins un (100 ; 200) s'étend transversalement au plan principal (17) pour relier les bords supérieurs des éléments (151, 152 ; 251, 252) de type coque à l'entretoise centrale (122 ; 222).

28. Motocycle selon la revendication 27, dans lequel les deux dispositifs de fixation d'une paire de dispositifs de fixation mécaniques (200, 201) s'étendent tous les deux transversalement au plan principal (17) pour relier les bords supérieurs des éléments (251, 252) de type coque et l'entretoise centrale (222) au niveau d'une paire d'emplacements différents.

29. Motocycle selon la revendication 25 pourvu d'une paire d'entretoises centrales espacées transversalement sur une grande partie de leur longueur se trouvant une de chaque côté du plan principal (17) et s'étendant toutes les deux à l'intérieur de la structure creuse de la structure monocoque (50).

30. Motocycle selon l'une quelconque des revendications 25 à 29, dans lequel chaque entretoise centrale (22 ; 122 ; 222) a globalement la forme d'un L lorsqu'on l'observe suivant une élévation de côté.

31. Motocycle selon l'une quelconque des revendications 25 à 30, dans lequel la ou les plusieurs entretoises centrales (22 ; 122 ; 222) sont formées à partir d'un matériau composite.

32. Motocycle selon l'une quelconque des revendications 25 à 31, dans lequel la ou les plusieurs entretoises centrales (22 ; 122 ; 222) sont formées à partir d'aluminium ou d'un alliage de celui-ci.

33. Motocycle selon la revendication 31, dans lequel la ou les plusieurs entretoises centrales (22 ; 122 ; 222) sont formées par un traitement d'extrusion.

34. Motocycle selon l'une quelconque des revendications 25 à 30, dans lequel la ou les plusieurs entretoises centrales (22 ; 122 ; 222) sont formées à partir de magnésium ou d'un alliage de celui-ci.

35. Motocycle selon la revendication 34, dans lequel la ou les plusieurs entretoises centrales (22 ; 122 ; 222) sont formées par un traitement d'extrusion.

36. Motocycle selon l'une quelconque des revendications 25 à 35, dans lequel la ou les plusieurs entretoises centrales (22 ; 122 ; 222) comportent une pluralité d'ouvertures s'étendant transversalement à travers celles-ci.

37. Motocycle selon l'une quelconque des revendications 25 à 36, dans lequel la ou les plusieurs entretoises centrales (22 ; 122 ; 222) ont chacune une configuration de type lame ayant une dimension verticale maximale au moins cinq fois plus grande que leur dimension transversale maximale.

38. Motocycle selon l'une quelconque des revendications 25 à 37, dans lequel une surface supérieure de la structure monocoque (50) se conforme à une surface supérieure de la ou des plusieurs entretoises centrales (22 ; 122 ; 222).

39. Motocycle selon l'une quelconque des revendications précédentes, dans lequel l'ensemble avant de suspension de roue comprend une paire de fourches parallèles espacées, et la tête de direction (13 ; 113 ; 213) et la structure monocoque (50) définissent, entre elles, une ou plusieurs ouvertures à travers lesquelles s'étendent les fourches et dans lequel la ou les plusieurs ouvertures définies ont une taille et une configuration qui suffisent à permettre une plage de mouvement pivotant des fourches autour de l'axe (16) de pivot de l'ensemble avant de suspension de roue.

40. Motocycle selon l'une quelconque des revendications précédentes, dans lequel un moteur (19) est monté sur la potence (18).

41. Motocycle selon l'une quelconque des revendications précédentes, dans lequel un ensemble (20) de siège est monté sur la potence (18).

42. Procédé de fabrication d'un motocycle selon l'une quelconque des revendications précédentes, dans lequel la structure monocoque (50), la tête de direction (13 ; 113 ; 213), la potence (18), le moteur (19) et les ensembles de suspension sont tous fabriqués individuellement en tant qu'éléments constituants indépendants, et dans lequel les éléments constituants terminés sont ensuite assemblés les uns aux autres.

43. Procédé de fabrication du motocycle selon l'une quelconque des revendications 25 à 37, dans lequel la tête de direction (13 ; 113 ; 213), la potence (18) et le moteur (19) sont d'abord assemblés avec la ou les plusieurs entretoises centrales (22 ; 122 ; 222) ; la ou les plusieurs entretoises centrales (22 ; 122 ; 222) favorisant le positionnement et l'orientation corrects de la tête de direction (13 ; 113 ; 213), de la potence (18) et du moteur (19), et, ensuite, la structure monocoque (50) est liée au moins à la tête de direction (13 ; 113 ; 213) et à la potence.

44. Procédé de fabrication du motocycle selon l'une quelconque des revendications 25 à 37, dans lequel la tête de direction (13 ; 113 ; 213) et la potence (18) sont liées à la ou aux plusieurs entretoises centrales (22 ; 122 ; 222).

45. Procédé selon la revendication 44, dans lequel une ou plusieurs potences (18) sont liées au moteur (19) du motocycle, et la ou les plusieurs potences (18) sont liées à la ou aux plusieurs entretoises centrales (22 ; 122 ; 222).
